# EUROPEAN PATENT APPLICATION

(11) **EP 2 148 546 A1**
(43) Date of publication of application: **27.01.2010**
(21) Application number: 08305417.1
(22) Date of filing: 24.07.2008
(51) Int. Cl.: H04W 72/08

(54) **A method for coordination of the interference in downlink or uplink between cells of a radio communication network, a base station, a terminal and a radio communication network therefor**

(71) Applicant: Alcatel Lucent, 75008 Paris (FR)
(72) Inventor: Gerlach, Christian Georg, Dr., 71254 Ditzingen (DE)
(74) Representative: Brose, Gerhard

(57) **Abstract**

The invention concerns a method for coordination of the interference in downlink or uplink between cells (C1, C2) of a radio communication network applying beamforming with the frequency bands used for downlink being subdivided into at least two downlink frequency subsets (FA, FB, FC), and frequency bands used for uplink being subdivided into at least two uplink frequency subsets, whereby a terminal (T1) performs power measurements of signals in downlink from at least one interfering cell (C2), the strength of the interference from beams from the at least one interfering cell is deduced from said measurements of signals in downlink, and the terminal (T1) is scheduled on at least one downlink frequency subset (FB) or at least one uplink frequency subset dependent on the beam or set of beams that causes the strongest interference for the terminal (T1), a base station, a terminal and a radio communication network therefor.

## Description

The invention relates to a method for coordination of the interference in downlink or uplink according to the preamble of claim 1, a terminal according to the preamble of claim 10, a base station according to the preamble of claim 11 and a radio communication network according to the preamble of claim 12.

Mobile radio systems with orthogonal transmission schemes such as Orthogonal Frequency Division Multiplexing (OFDM), single carrier Frequency Division Multiple Access (FDMA) or distributed FDMA such as interleaved FDMA with multiple terminals and cells will become increasingly important e.g. for future evolutions of air interfaces for mobile radio systems. Those radio systems are currently under discussion e.g. in Third Generation Partnership Project (3GPP) Technical Specification Group (TSG) Radio Access Network (RAN), for Wireless Local Area Networks (WLANs) e.g. according to standard IEEE 802.11a, or for a 4^{th} generation air interface.

Given the licensed bandwidth, transmission capacity from network providers e.g. for picture uploading or video communication has to be as high as possible for all users to serve as many subscribers as possible. Further the quality of service experienced by the user and especially the coverage of the service is an important property demanded by the user. So an access scheme shall work well at the cell borders of a communication network with frequency reuse.

In cellular systems with a frequency reuse factor of 1 the signal to interference ratio at the cell border can approach the factor 1 or 0 dB, so that no useful transmission from a terminal to the base station can be kept up if a terminal from a neighboring cell is near to the considered terminal and sends with the same power on the same frequencies or if in downlink a terminal is equally far away to its serving and an interfering base station.

Therefore in CDMA (CDMA = Code Division Multiple Access) a soft handover exists and the terminals always use a different (terminal specific) scrambling code. The reception is then possible using the spreading gain from CDMA. As is known due to the strong interference the capacity is considerably limited.

In OFDM transmission, frequency groups are allocated to a terminal instead of codes in CDMA transmission. In other FDMA orthogonal schemes, frequencies are also allocated to a terminal. So in these schemes in contrast to CDMA transmission, interference can be planned and avoided. For these orthogonal transmission schemes the problem at the cell border has to be solved as well.

One existing solution to apply frequency planning for the cells is by means of giving each whole cell a distinct frequency band.

However, frequency distribution to the different cells reduces the available resources per cell very considerably, e.g. by a factor of 1/3 or 1/7 depending on the network structure, and thus the overall system throughput is also reduced. This implies a waste of resources for the inner area of a cell.

A frequency reuse of e.g. 1/3 only in the outer part of the cell is possible but still wastes too much resources.

Another existing solution to apply frequency planning for the cells is by means of subdividing the frequency bands in frequency subsets and to schedule in downlink a terminal on a frequency subset where it does not experience interference or to schedule in each cell the terminals in uplink in a way to concentrate inter-cell interference on other base stations on e.g. one dedicated frequency subset in each cell and reduce this way the interference in the other frequency subsets. It is assumed that there is almost no interference between the different frequency subsets. This solution is an example for the so-called coordination of interference that describes the coordination of inter-cell interference by means of frequency planning.

An uplink channel is designed so that a terminal that is interfering on other base stations is identified e.g. by cell specific pilots emitted by the terminal and recorded. Base stations that sense the interference send reports to the serving base station of the terminal. The reports about the disturbance by interference are gathered in the serving base station and the terminal's uplink is scheduled by the serving base station in order to avoid the biggest disturbance and to help the strongest affected base station. Thus, the terminal gets allocated to a dedicated frequency subset to which the strongest affected base station does not schedule its own mobile terminals or only schedules them if they are very near to its antenna.

So the uplink interference in the strongest affected base station is reduced on all other frequency subsets besides the dedicated frequency subset this way allowing a terminal to use these other frequency subsets in the border region of the strongest affected cell with reduced interference, so that a useful transmission can be kept up.

In order to avoid extensive signaling of interference disturbance reports, the terminals can also on their own predict in advance in which cell they will create disturbance based on the approximation that their downlink interference or path loss measurement is reciprocal to their uplink interference generation. The terminal will then demand appropriate uplink scheduling to create interference only in the dedicated frequency subset, i.e. in the restricted frequency group, of the disturbed cell. This also results in a reduction of the uplink interference on each base station in the not restricted resources.

If in case of multi-antenna reception, i.e. beamforming, the interference is seen only from one or few interfering terminals, the base station can additionally also try to evade the interference and try to schedule its mobile terminal on a less disturbed frequency subset which is in principle the same as adaptive subcarrier allocation.

In the inner area of a cell that is near to the base station, all frequency subsets, i.e. all frequencies, can be used and due to limited interference from other cell's mobile terminals the dedicated power level does not need to be exceeded. So all frequencies are evenly used over the area giving an optimum resource usage for evenly distributed mobile terminals.

Such a communication network with interference coordination in the uplink between cells is e.g. described in the European patent application EP05291278.9

In order to implement Interference Coordination of the interference in downlink or uplink between cells of a communication network applying beamforming, information measured by the terminal about the interference on a terminal caused by interfering beams in downlink from neighboring cells has to be available in the serving or scheduling base station.

This information e.g. about the frequency averaged strength of the impact, e.g. path loss and shadowing, can be used for uplink and downlink scheduling.

However, currently there is no such strength information about the interference on a terminal caused by interfering beams in downlink available in the serving or scheduling base station.

The object of the invention is thus to propose a method for making available in the serving or scheduling base station of a terminal strength information about the interference on said terminal caused by interfering beams in downlink from neighboring cells.

This object is achieved by a method according to the teaching of claim 1, a terminal according to the teaching of claim 10, a base station according to the teaching of claim 11 and a radio communication network according to the teaching of claim 12.

The main idea of the invention is, that a terminal performs measurements of signals in downlink from at least one interfering cell, that the strength of the interference from beams from the at least one interfering cell is deduced from said measurements of signals in downlink, and that the terminal is scheduled on at least one downlink frequency subset or at least one uplink frequency subset dependent on the beam or set of beams that causes the strongest interference for the terminal.

Further developments of the invention can be gathered from the dependent claims and the following description.

In the following the invention will be explained further making reference to the attached drawings.

Fig. 1 schematically shows the interference situation in the uplink at the border between two cells in a communication network with frequency reuse.

Fig. 2 schematically shows the partitioning of an OFDM or single carrier FDMA (SC-FDMA) frequency band in disjoint frequency subsets and the power limitation of a dedicated frequency subset in downlink.

Fig. 3 schematically shows a hexagonal cell pattern with allocation of dedicated frequency subsets to terminals in border region.

Fig. 4 schematically shows a sectorized cell pattern with allocation of dedicated frequency subsets to terminals in border region in downlink or uplink.

Fig. 5 schematically shows the cell or beam specific uplink pilots in OFDM transmission.

Fig. 6 schematically shows a frequency reuse scheme with power limitation of a dedicated frequency subset in downlink or dedication to be burdened by interference in uplink in each cell portion defined by a beam in downlink or uplink in an OFDM system.

A radio communication network according to the invention comprises terminals and base stations.

Each of said terminals is connected via a radio connection to one or multiple of said base stations, and the base stations are in turn connected either via base station controllers or directly to a core network.

The terminals comprise the functionality of a terminal for transmission and reception in a radio communication network as e.g. an OFDM network, i.e. they can be connected to a radio communication network by means of a base station.

A terminal according to the invention comprises at least one processing means for performing measurements of signals in downlink from at least one interfering cell, and for deducing the strength of the interference from beams from the at least one interfering cell from said measurements of signals in downlink.

Furthermore, a terminal according to a preferred embodiment of the invention comprises at least one processing means for performing measurements of pilot signals in downlink from the at least one interfering cell, and determining from said pilot signals weights being optimal for transmission to the position of the terminal from the antennas of the at least one interfering cell .

The base stations comprise the functionality of a base station of a radio communication network as e.g. a WLAN or an OFDM network, i.e. they provide the possibility for terminals to get connected to the radio communication network.

Furthermore, the base station according to the invention comprises at least one processing means for deducing the strength of the interference from beams from at least one interfering cell from said measurements of signals in downlink, and scheduling a terminal on at least one downlink frequency subset or at least one uplink frequency subset dependent on the beam that causes the strongest interference for the terminal.

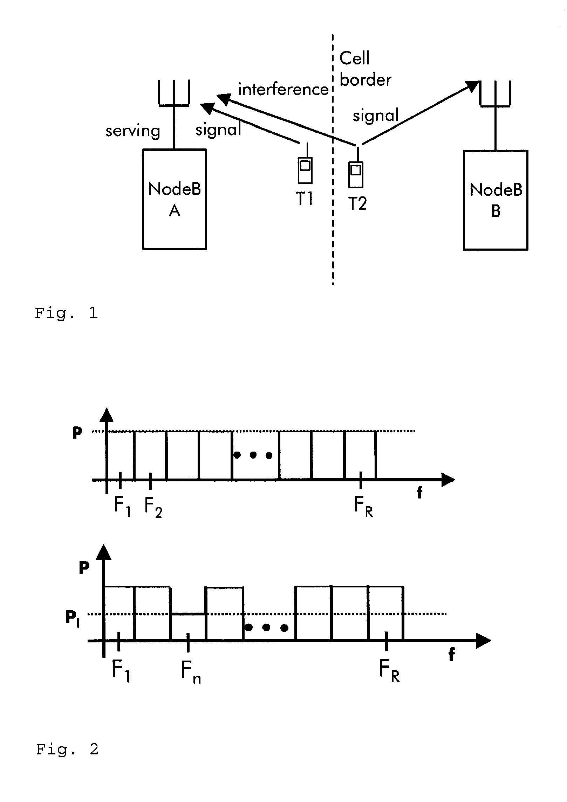

In the following, by way of example the method according to the invention is described in detail making reference to figs. 1 to 6.

The method according to the invention is described for an OFDM transmission using beamforming for UTRAN enhancement (UTRAN = Universal Mobile Telecommunication System Terrestrial Radio Access Network), but the invention could also be used e.g. for a single carrier system with cyclic prefix and frequency domain equalization or other FDMA system, where the different carriers are distributed to the mobile terminals.

Fig. 1 shows the interference situation in the uplink in a multi-cell OFDM network with frequency reuse that comprises by way of example two base stations NodeB A and NodeB B and two terminals T1 and T2.

The terminal T1 is connected to the base station NodeB A, i.e. the base station NodeB A is the serving base station for the terminal T1 which is depicted by an arrow from the terminal T1 to the base station NodeB A. As the terminal T2 is located near the cell border of the cell that is served by the base station NodeB A, which is depicted by a dotted line, the base station NodeB A notices interference from terminal T2, which is depicted by an arrow from the terminal T2 to the base station NodeB A. T2 is served by NodeB B.

If synchronization for the cells can not be assumed, interference avoidance has to be based only on distribution of different frequencies and not on distribution of different time slots.

For wideband CDMA (WCDMA) transmission in UMTS (UMTS = Universal Mobile Telecommunication System), resources that are allocated to the terminals are never without interference, so there is no particular problem for a terminal when entering a new cell to still go on using its scrambling and channelization code.

In OFDM as in CDMA transmission also soft handover using diversity could be performed for terminals in the overlapping region of two cells. But in OFDM in contrast to CDMA transmission, the used carrier signals are strictly orthogonal. So if a terminal T2 uses a resource in cell B and enters into cell A, these resources are usually already taken by one or multiple other terminals in cell A. These one or multiple other terminals are now disturbed by the interference of terminal T2. If there is exactly one disturbed terminal, the two competing terminals could be distinguished by the channel coding which means that the interference would again be spread and this limits the channel capacity for both.

According to the prior art, in order to allow an OFDM or single carrier system with frequency domain equalization to work with frequency reuse of 1 and preferably without soft handover, and to coordinate the interference in uplink, partitioning the frequency band into frequency subsets is proposed.

Fig. 2 shows in the upper part a number of R disjoint frequency subsets F1 F2...FR along the frequency axis f. All these frequency subsets can have the same maximum power value along the power axis p, i.e. all frequency subsets are used with the same maximum power. These frequency subsets may contain frequency diverse frequency patterns to be robust against a frequency selective fading channel. For simplicity they are depicted as blocks over the frequency axis f as given in fig. 2.

A planning for downlink power or uplink use of frequency subsets out of the frequency bands of a specific cell is performed.

In downlink, depending on to which cell a terminal belongs, a dedicated frequency subset can only be used with a limited power in the cell.

In uplink, a dedicated frequency subset in a specific cell is selected to be burdened by inter-cell interference from terminals of neighbor cells. Said terminals of neighbor cells preferably use said dedicated frequency subset if scheduled in uplink and positioned near to the specific cell.

The power restriction is illustrated in the lower part of fig. 2. Here, it can be seen that the dedicated frequency subset Fn can only be used maximally with the limited power pl.

If a terminal uses a certain frequency subset for data transmission to or from its base station, it can happen that this certain frequency subset is also used in the neighbor cell or sector for another uplink connection. So e.g. if terminal T1 in fig. 1 uses the certain frequency subset to send to base station NodeB A, and near to the cell border of the cell the mobile terminal T2 in a neighbor cell uses this same certain frequency subset to transmit to base station NodeB B, the base station NodeB A experiences interference from terminal T2 if it tries to receive transmitted signals on the certain frequency subset from its client terminal T1.

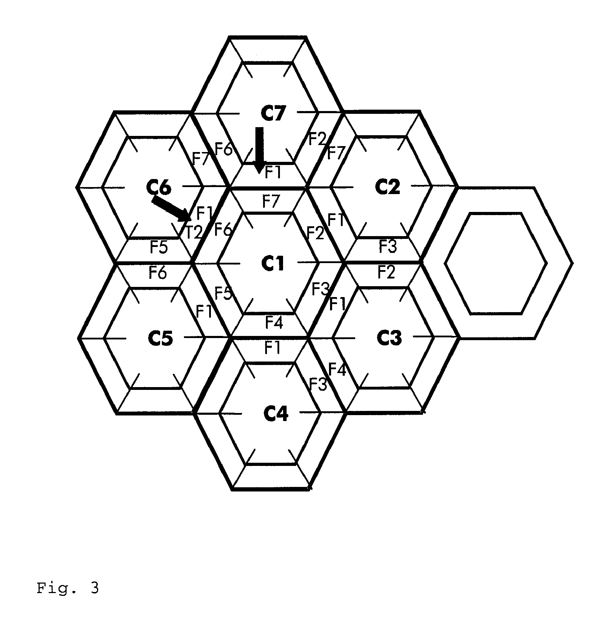

Interference power planning can be illustrated for omnidirectional antennas and hexagonal cells as given in fig. 3 for the case of R=7.

The cells are denoted Cn with the number n indicating the dedicated frequency subset Fn of the respective cell, and the frequency subsets Fk that are used in the border regions of the cells are denoted with Fk. In the inner area of the cells, all frequency subsets are used for downlink or uplink.

The respective dedicated frequency subset Fn is in downlink preferably only used with limited power according to fig. 2.

By choosing R=7, it is achieved that a cell is surrounded by neighbors with a different cell number n, i.e. with a different dedicated frequency subset Fn.

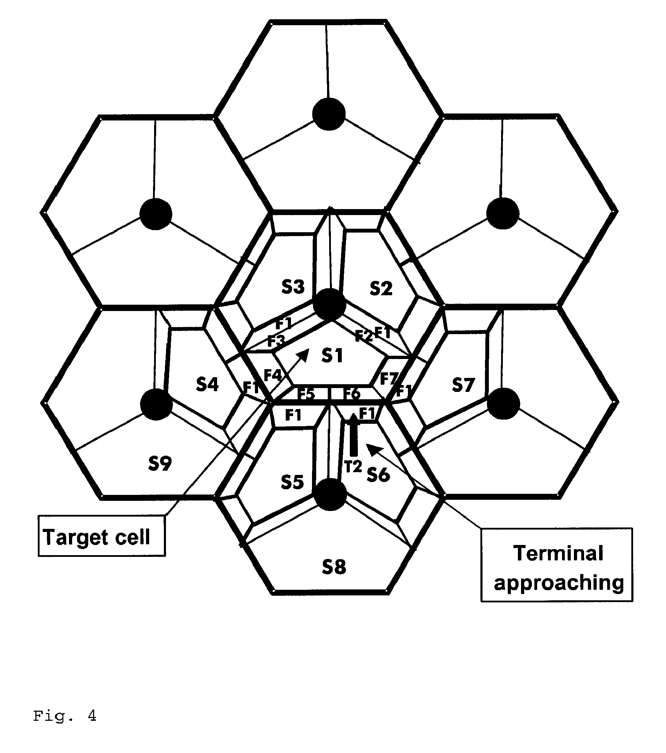

An analogue scenario is depicted in fig. 4. Here, the interference power planning is illustrated for sectorized hexagonal cells for the exemplary case of R=9.

The sectors are denoted Sn with n indicating the dedicated frequency subset Fn of the respective sector, and the frequency subsets Fk that are used in the border regions of the sectors are denoted with Fk. In the inner area of the sectors, all frequency subsets are used for downlink or uplink, but the respective dedicated frequency subset Fn is burdened more by interference and can only be used under observation of the strong inter-cell interference inside this inner area.

The respective dedicated frequency subset Fn is in downlink preferably only used with limited power according to fig. 2.

If in case of OFDM or SC-FDMA transmission, the terminals in a cell use different frequency subsets to achieve multiplexing of the terminals, each frequency subset or terminal must have a specific pilot, i.e. a specific signal, so that the base station is capable to do channel equalization for each terminal individually.

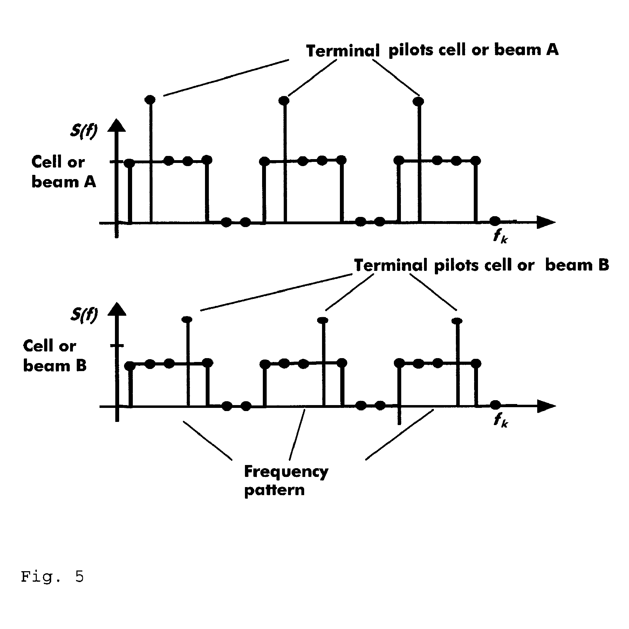

The base station identifies from which cell's terminal in one time-frequency or frequency pattern the e.g. strongest interference stems from. This can e.g. be realized by positioning terminal pilots in the time-frequency or frequency patterns in the uplink at positions that are cell, sector or beam specific and differ between neighbor cells, sectors or beams. This scenario is sketched in fig. 5.

In fig. 5, for frequency patterns, i.e. frequency subsets, along the frequency axis f, the signal levels are depicted along the signal axis S(f). In each frequency pattern, there is a terminal pilot having an amplitude level different from the absolute amplitude level used for data transmission.

In the upper part of fig. 5, the frequency patterns for a cell or beam A and in the lower part, the frequency patterns for a cell or beam B are depicted. The terminal pilots have different positions on the frequency axis for the frequency patterns in cell or beam A and cell or beam B, which can be used to identify the serving cell or beam of a terminal.

Alternatively, for a single carrier FDMA system the cell identification can be realized by using training sequences in uplink that are cell specific.

The base station identifies from which cell on which frequency pattern at what time the interference comes and with what strength or damage it comes. It then contacts the serving base station for an identified maybe worst disturbing cell.

In fig. 1 e.g., the base station NodeB A identifies that the interference caused by terminal T2 is coming from the cell that is served by base station NodeB B and the base station NodeB A contacts base station NodeB B e.g. via the Network or directly.

With that information or further information about its terminals such as geographic information the base station NodeB B is able to find out from which of its terminals the interference was sent out by means of looking at its history. It then combines the interference reports from other disturbed base stations for that terminal T2.

In fig. 3 and 4, interfering mobile terminals, like mobile terminal T2 using e.g. frequency subset F2 for uplink, that approach and disturb cell C1 in fig. 3 and sector S1 in fig. 4 respectively are depicted as arrows.

The base station with the strongest interference strength or highest damage, in our example base station of cell C1 or sector S1, is helped now under observation of some other conditions such as load or network criteria if possible by scheduling the terminal T2 on frequency patterns of the dedicated frequency subset F1 of cell C1 or sector S1. This removes the interference on the frequency subset F2 used before, which can now be used in cell C1 or sector S1 uplink with improved signal to noise ratio.

Similar, as shown for uplink in fig. 5, the base station in each cell use different cell specific signals e.g. pilots or synchronization signals for downlink transmission. Taking measurements of the downlink interference impact, or downlink path loss and shadowing, the terminal or the base station receiving said measurements can also predict on their own in advance in which cells they will create damage based on the approximation that their downlink interference measurement is reciprocal to their uplink interference generation. This method has the advantage, that it avoids extensive signaling of interference damage reports.

Therefore, if the method according to the state of the art described above is applied for all cells or sectors, as depicted in fig. 3 and fig. 4, the dedicated frequency subset Fk, which is the frequency subset that is selected to be burdened with inter-cell interference in cell Ck, is used by terminals, in their respective neighbor cell border region, which have on cell Ck the strongest interference impact or cause the highest interference damage in cell Ck.

In the example, it is assumed that the closest neighbor cell or sector is the one with the strongest interference strength or highest damage as described above, however, this is not necessarily always the case.

As one can see from fig. 3 and fig. 4, if one marks the border regions from all cells also with the used frequency subset Fk, all frequencies in uplink are evenly used over the area of multiple cells with full symmetry giving a near optimum resource usage for evenly distributed terminals assuming isotropic propagation conditions.

Additionally, looking at the surrounding of cell C1 in fig. 3, the frequency subset F1 is used from all surrounding terminals from neighbor cells. So as is the goal, the interference from the outside terminals on the base station of cell C1 is concentrated on the frequency subset F1 and reduced on the other frequency subsets.

Preferably, to protect the method according to the state of the art against failures, a terminal that has cell Cn or sector Sn as closest neighbor cell or neighbor sector observes a power limitation for the frequency subsets that are not the dedicated frequency subset Fn or it is scheduled so that frequencies that do not belong to the dedicated frequency subset Fn are only emitted with limited power p1 by the terminal. This limited power pl should be chosen with view to the situation at the cell border where the desired signal and interference is approximately equally attenuated. So this value should guarantee that terminals from cell Cn or sector Sn are not disturbed in the uplink transmission by neighbor terminals that are not scheduled in a neighbor cell or sector exactly on patterns of the frequency subset Fn and are located near the cell or sector border. This still maintains the interference concentration effect.
In consequence, the frequency subset Fn inside cell Cn or sector Sn can only be used by mobile terminals near to the antenna of cell Cn or sector Sn, i.e. in the inner area of cell Cn or sector Sn, and interference on the frequency subset Fn coming from terminals of neighbor cells or sectors can be tolerated to a considerable extent.

Instead of the definition and usage of dedicated frequency subsets out of the frequency band for interference coordination, one can also define and use dedicated timeslots in each cell or sector in an analogue way as described above in order to perform interference coordination.

In downlink, the dedicated frequency subset Fn is used only with limited power pl by the base station according to fig. 2. A terminal measures cell specific signals, e.g. synchronization or pilot signals, to estimate the downlink interference impact from the neighbor base stations and reports this to the serving base station. The serving base station identifies the strongest interfering cell Cn and schedules the terminal on the dedicated frequency subset Fn where it does not experience interference from cell Cn. Therefore as also shown in fig. 3 and fig. 4 terminals approaching cell Cn or sector Sn from the outside are scheduled on this restricted dedicated frequency subset Fn, since here no interference from cell Cn or sector Sn has to be expected.

In case of beamforming inside the sectors Sn, the beams are normally defined different, i.e. with a different angle, inside one sector so that they are not coupled. This distance between the different beams defines e.g. the grid of beams that is used inside one sector.

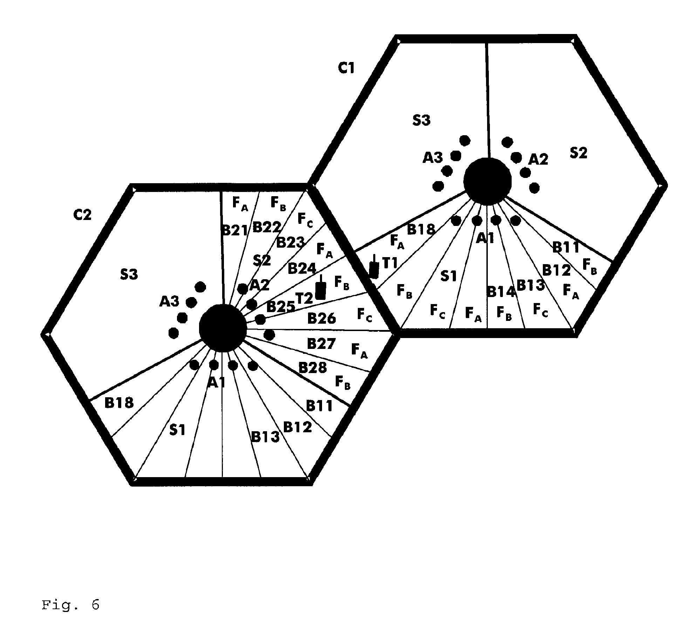

In fig. 6 two cells C1, C2 each comprising three sectors S1, S2, S3 are depicted. In each sector, there is an antenna array A1, A2, A3 that each exemplarily comprises 4 antennas that are depicted as dots in fig. 6. The antenna arrays A1, A2, A3 are used for beamforming inside the sectors S1, S2 and S3 respectively. The beams that are created this way define cell portions so that terminals T1, T2 located inside such a cell portion are allocated to the corresponding beam.

In fig. 6, the cell portions that are defined by the respective beam are denoted B11-B18 for sector S1 and B21-B28 for sector S2. The cell portions are not depicted for all sectors S1-S3 in fig. 6 for the sake of simplicity.

Thus, known frequency or time reuse techniques of interference coordination can be used over the correspondingly defined cell portions B11-B28.

In general, frequency, time and angle are the available resources of a base station over which a fractional reuse scheme can be applied in order to avoid interference.

In case of frequency reuse, the above-described frequency reuse scheme can be applied over the beams, i.e. cell portions shown in fig. 6.

In fig. 6, the frequency band is exemplarily subdivided into three frequency subsets FA, FB, FC. In downlink inside each beam, i.e. cell portion B11-B28, as an example a dedicated frequency subset is used only with reduced power and 2 frequency subsets are used with full power. In fig. 6, for each cell portion B11-B28 the dedicated frequency subset FA, FB or FC that is used with restricted power is indicated.

Depending on what the next strongest beam is that is interfering on a terminal T1, the terminal T1 is scheduled on frequency subsets that are not or only weakly disturbed by interference from that next strongest beam. So e.g. if the terminal T1 is served by a beam with a power restriction on frequency subset FA and it is near to a beam B25 with a power restriction on subset FB, the terminal T1 is scheduled on the frequency subset FB.

This knowledge of beam or cell portion neighborhood can also be used for scheduling of frequency subsets to the terminals T1, T2 in uplink for interference coordination.

In other words, the terminals T1, T2 can also on their own predict in advance in which cell portions they will create damage based on the approximation that their downlink interference measurement is reciprocal to their uplink interference generation. This method has the advantage, that it avoids extensive signaling of interference damage reports.

A terminal, e.g. terminal T1 in fig. 6, will signal its serving base station the measurements about the downlink interference, and a scheduler will then apply appropriate uplink scheduling of terminal T1 to the dedicated frequency subset of the disturbed cell portion or beam B25 to create interference only in the restricted frequency group, i.e. in the dedicated frequency subset of the disturbed cell portion or beam B25. In the disturbed cell portion or beam B25, said dedicated frequency subset is either not used or only used in uplink by terminals with sufficient power or in the inner part of the disturbed cell portion or beam B25.

This also results in a reduction of the uplink interference on each base station in the not restricted resources and does not need signaling between base stations.

According to the state of the art, inside the serving cell C1, the terminal T1 reports the preferred weights for transmission from the serving cell antenna array A1 that lead to a high signal to interference and noise ratio at the terminal T1 to its serving base station as so called precoding matrix indicators (PMI). The reporting of this preferred weights, if it is fine enough, can be used to estimate the distance to the neighbor beams inside the serving cell C1, as the usage of the preferred weights will lead to a preferred beam used for terminal T1 in downlink.

However, in order to implement frequency scheduling schemes in a multi cell network, terminals T1, T2 must perform power measurements over the frequency range for sensing the neighborhood interference strength also from neighboring cells.

The method according to the invention to find out the neighborhood interference strength for interference coordination and to report it in a suitable way in case of beamforming is described in the following.

In case of beamforming, different beams are formed by means of using different combinations of weights e^{*i*ϕ*ₖ*}, i.e. precoding matrices, of the antennas of the base station. Typical values for the resulting beam directions are 0°, 15°, 30° and 45°. As pilot symbols are known in the receiver, the combination of weights *e*^{*i*ϕ*ₖ*} being optimum for transmission to the terminal location can be determined by means of measurements of pilot symbols in the receiver. Thus, by means of measuring pilot symbols and determining weights a beam location or neighborhood can be measured by a receiver.

Inside the serving cell C1, the terminal T1 performs measurements of signals in downlink from at least one interfering cell C2. Then, the strength of the interference from beams from the at least one interfering cell C2 is deduced from said measurements of signals in downlink, and the terminal T1 is scheduled on at least one downlink frequency subset FB or at least one uplink frequency subset dependent on the beam B25 that causes the strongest interference for the terminal T1.

Preferably, said at least one downlink frequency subset FB or said at least one uplink frequency subset is used with reduced power in the beam B25 that causes the strongest interference for the terminal T1. As an alternative in uplink, said at least one uplink frequency subset is not used in the beam B25 that causes the strongest interference for the terminal T1.

In an embodiment of the invention, the terminal T1 performs measurements of pilot signals in downlink from the at least one interfering cell C2, optimum weights for transmission from antennas A2 of the at least one interfering cell C2 are determined from said pilot signals together with a strength information, and the beam B25 or set of beams B25 and B24 that causes the strongest interference for the terminal T1 is deduced from said weights.

The terminal T1 is then scheduled on the frequency subset FB that is restricted inside beam B25 or on a frequency subset that is restricted in both beams B25 and B24.

Preferably, the terminal T1 determines the weights, and reports to its serving base station said weights and a strength information. The reporting of strength information and said weights, if it is fine enough, can be used to estimate which cell portion or beam B25 in the interfering cell C2 causes the strongest interference at terminal T1 in cell C1. Thus, the influence of the interference from beams from the at least one interfering cell is deduced from said weights and strength information.

As an alternative, the terminal T1 reports to its serving base station said measurements of pilot signals in downlink, and said weights are determined in the serving base station.

It is then possible to schedule terminal T1 in cell C1 in downlink on a frequency subset FB that is only used with restricted power in the cell portion B25 in the interfering cell C2, or in uplink on a frequency subset that is not used or only used in the inner area in the cell portion B25 in the interfering cell C2. Thus, the terminal T1 is scheduled on at least one frequency subset for downlink or uplink dependent on said influence of the interference from beams from the at least one interfering cell C2.In an embodiment of the invention, said appropriate weights are indicated as so-called precoding matrix indicators, i.e. the terminal T1 reports e.g. the precoding matrix indicators for the strongest interfering cells, possibly together with pilot power measurements, i.e. strength information.

In an embodiment of the invention, said signals measured by the terminal T1 are e.g. pilot symbols or reference symbols that comprise an indication allowing for an identification of the respective beam. Beams used in downlink in each cell can use so-called dedicated pilots or reference symbols on each beam. Said dedicated pilots or reference symbols get some processing like e.g. a scrambling code on the pilot pattern or an indication bit depending on the used beam direction in order to identify the beam direction. Thus for the terminal T1 it is also possible to measure these dedicated pilots or reference symbols sent from neighbor cells and to use the indication comprised in the dedicated pilots or reference symbols for an identification of the respective beam.

Preferably, the terminal T1 reports the neighbor cell beam B25 that is the strongest interfering one by reporting the received power of the dedicated pilots or reference symbols and the weights or beam direction for the interfering cell's beams.

If there are power restrictions on frequencies per beam or cell portion, this exhibits also in the interference shape that the terminal T1 sees. However this shape only shows up if the terminal T1 does either an equalization of the interfering channel transfer functions and/or does a long time averaging over these potentially frequency dependent interference measurements. Thus, in an embodiment of the invention it is proposed that the terminal T1 performs an equalization of the channel transfer functions related to the signals from said at least one interfering cell C2, and in another embodiment, it is proposed, that the terminal T1 performs an averaging over a predefined time of said measurements. The terminal T1 then reports a frequency selective CQI report (CQI = channel quality indicator) that reflects the colored interference from neighbor beams also from other cells C2. This can then also be used as an identification of the respective interfering beam for downlink scheduling. Depending on the alignment of uplink and downlink re-use schemes it can also be used for uplink scheduling if e.g. from the restriction in downlink it can be deduced the preference frequency subset to be used in uplink.

The method according to the invention allows in case of beamforming to find out the neighborhood strength of interference for interference coordination, and it allows that the known reuse scenarios can be implemented in order to improve the cell edge bit rate.

## Claims

1. A method for coordination of the interference in downlink or uplink between cells (C1, C2) of a radio communication network applying beamforming with frequency bands used for downlink being subdivided into at least two downlink frequency subsets (FA, FB, FC), and frequency bands used for uplink being subdivided into at least two uplink frequency subsets **characterized in, that**
• a terminal (T1) performs measurements of signals in downlink from at least one interfering cell (C2),
• the strength of the interference from beams from the at least one interfering cell is deduced from said measurements of signals in downlink,
• and the terminal (T1) is scheduled on at least one downlink frequency subset (FB) or at least one uplink frequency subset dependent on the beam or set of beams that causes the strongest interference for the terminal (T1).

2. A method according to claim 1, **characterized in, that** said at least one downlink frequency subset (FB) is used with reduced power in the beam (B25) that causes the strongest interference for the terminal (T1) or said at least one uplink frequency subset is dedicated to be burdened by interference in the beam (B25) that is interfered by the terminal (T1) the strongest.

3. A method according to claim 1 or 2, **characterized in, that**
• the terminal (T1) performs measurements of pilot signals in downlink from the at least one interfering cell (C2),
• weights being optimal for beam transmission to the position of the terminal (T1) from antennas (A2) of the at least one interfering cell (C2) are determined from said pilot signals,
• and the beam that causes the strongest interference for the terminal (T1) is deduced from said weights.

4. A method according to claim 3, **characterized in, that** the terminal (T1) determines the weights, and reports to its serving base station said weights.

5. A method according to claim 1, 2 or 3, **characterized in, that** said signals are beam specific pilot symbols or reference symbols that comprise an indication allowing for an identification of the respective beam.

6. A method according to claim 3, 4 or 5, **characterized in, that** said appropriate weights are indicated as precoding matrix indicators.

7. A method according to claim 1 or 2, **characterized in, that** the terminal (T1) reports to its serving base station a frequency selective channel quality indicator that reflects the frequency selective interference.

8. A method according to claim 7, **characterized in, that** the terminal (T1) performs an equalization of the channel transfer functions related to the signals from said at least one interfering cell (C2).

9. A method according to claim 7, **characterized in, that** the terminal (T1) performs an averaging over a predefined time of said measurements.

10. A terminal (T1) adapted for coordination of the interference in downlink or uplink between cells (C1, C2) of a radio communication network applying beamforming with frequency bands used for downlink being subdivided into at least two downlink frequency subsets (FA, FB, FC), and frequency bands used for uplink being subdivided into at least two uplink frequency subsets, **characterized in, that** the terminal (T1) comprises at least one processing means for
• performing measurements of signals in downlink from at least one interfering cell (C2),
• and deducing the strength of the interference from beams from the at least one interfering cell from said measurements of signals in downlink.

11. A base station adapted for coordination of the interference in downlink or uplink between cells (C1, C2) of a radio communication network applying beamforming with frequency bands used for downlink being subdivided into at least two downlink frequency subsets (FA, FB, FC), and frequency bands used for uplink being subdivided into at least two uplink frequency subsets, **characterized in, that** the base station comprises at least one processing means for
• deducing the strength of the interference from beams from at least one interfering cell from measurements of signals in downlink,
• and scheduling a terminal (T1) on at least one downlink frequency subset (FB) or at least one uplink frequency subset dependent on the beam or set of beams that causes the strongest interference for the terminal (T1).

12. A radio communication network comprising base stations and terminals (T1, T2) adapted for coordination of the interference in downlink or uplink between cells (C1, C2) of a communication network applying beamforming with frequency bands used for downlink being subdivided into at least two downlink frequency subsets (FA, FB, FC), and frequency bands used for uplink being subdivided into at least two uplink frequency subsets, **characterized in, that** the base stations comprise at least one processing means for
• deducing the strength of the interference from beams from the at least one interfering cell from said measurements of signals in downlink,
• and scheduling the terminal (T1) on at least one downlink frequency subset (FB) or at least one uplink frequency subset dependent on the beam or set of beams that causes the strongest interference for the terminal (T1).
